# EUROPÄISCHE PATENTSCHRIFT

(11) **EP 0 358 068 B1**
(45) Veröffentlichungstag und Bekanntmachung des Hinweises auf die Patenterteilung: **22.09.1993**
(21) Anmeldenummer: 89115756.2
(22) Anmeldetag: 26.08.1989
(51) Int. Cl.: G21C 3/335, G21C 5/00, G21C 3/326

(54) **Verfahren zur Reparatur eines Kernreaktorbrennelementes und Anordnung eines reparierten Brennelementes im Brennelementverband einer Kernreaktoranlage**
Method for repairing a nuclear fuel assembly and arrangement of a repaired fuel assembly in a fuel assembly unit of a nuclear reactor
Méthode de réparation d'un assemblage de combustible nucléaire et repositionnement d'un assemblage réparé dans le coeur d'un réacteur nucléaire

(30) Priorität: 03.09.1988 DE 3830067
(43) Veröffentlichungstag der Anmeldung: 14.03.1990
(73) Patentinhaber: ABB Reaktor GmbH, D-68167 Mannheim (DE)
(72) Erfinder: Hoffmann, Heinz, Dr., D-6141 Einhausen (DE); Skoff, Gerald, Dr., D-6806 Viernheim (DE); Alexas, Alexander, Dr., D-7513 Stutensee 1 (DE); Ehlers, Klaus Dieter, Dr., D-6806 Vierheim (DE)
(74) Vertreter: Rupprecht, Klaus, Dipl.-Ing.

(56) Entgegenhaltungen:
- EP-A- 0 171 210
- EP-A- 0 252 375
- DE-A- 3 532 797

## Beschreibung

Die Erfindung betrifft ein Verfahren zur Reparatur eines an der Peripherie eines Abstandshalters beschädigten Kernreaktorbrennelementes eines wassergekühlten Kernreaktors, das aus einem Bündel längserstreckter Brennstäbe besteht, die über mehrere gitterförmige, axial zueinander beabstandete Abstandshalter in ihrer Position gehalten sind, wobei jeder Brennstab eien von hochkant angeordneten, sich kreuzenden Blechstegen gebildete Zelle des Abstandshalters durchsetzt und darin federnd abgestützt ist.

Während der Be- oder Entladung eines Reaktorkerns mit Brennelementen werden gelegentlich periphere Abstandshalterzellen durch Verhaken mit Nachbarbrennelementen beschädigt.

Zur Behebung solcher Schäden wurde seither nach dem Abtrennen bzw. Richten der beschädigten Blechteile des Abstandshalters ein Brennstab oder eine Brennstabattrappe wieder in die Position eingesetzt. Insbesondere wenn zwei oder mehr übereinander angeordnete Abstandshalterzellen beschädigt sind und die Blechteile komplett entfernt werden müssen, führt die fehlende Halterung zu Schwingungen des Brennstabes mit nicht auszuschließender Beschädigung des selben oder der Nachbarbrennstäbe.

Will man das Schwingen vermeiden, so müssen nach dem Stand der Technik in einer zeitaufwendigen Weise alle Stäbe des Brennelementes gezogen und in ein neues Brennelement-Skelett bestehend aus Abstandshalter, Führungsrohren und Endstücken eingesetzt werden. Neben dem Zeitverlust besteht hier noch die Gefahr, daß die Brennstäbe bei dem Ziehen und Wiedereinsetzen unzulässige Kratzspuren erhalten und außerdem die Abstandshalter beschädigt werden.

Zur Vermeidung der Schwingungen und der aufwendigen Arbeiten beim Wiedereinsetzen eines Brennstabes oder einer Brennstabattrappe wird nach der Erfindung ein anderer Weg beschritten, in dem die beschädigten Stege abgetrennt und der Brennstab ersatzlos entfernt wird.

Auch bei Schäden an beliebigen Kernpositionen kann ein Brennstab ersatzlos entfernt werden.

Berechnungen für ein typisches Druckwasserreaktor-Brennelement der 17 x 17 Stabanordnung haben gezeigt, daß ein fehlender Stab den thermischen Neutronenfluß im sogenannten Wasserspalt etwas anhebt und das Neutronenspektrum in den benachbarten Brennstäben weicher macht.

Daraus ergibt sich eine Leistungserhöhung in den Nachbarbrennstäben der unbesetzten Position um bis zu 11 % bezogen auf das Brennelement ohne Wasserspalt. Diese Werte bewegen sich in den zulässigen Grenzen und liegen überraschenderweise nur unwesentlich über den Werten, die beim Einsatz von Brennstabattrappen (z. B. eines Zircaloy-4-Massivstabes) auftreten. Auch beim Einsatz eines Ersatzbrennstabes treten Leistungsassymetrien auf, da in der Regel der Ersatzbrennstab neu ist und daher nicht im gleichen Umfang bestrahlt ist wie der ausgetauschte Brennstab mit einem Abbrand von mindestens einem Zyklus.

Durch ein einfaches Herausnehmen des nicht mehr zuverlässig in den einzelnen Zellen einer Stabposition zu haltenden Brennstabes wird ohne aufwendige Zusatzarbeiten der weitere Einsatz eines an der Peripherie eines Abstandshalters beschädigten Brennelementes erreicht.

Die Anordnung eines derartig reparierten Brennelementes im Brennelementverband einer Kernladung muß in einer solchen Kernposition erfolgen, bei der eine Leistungserhöhung in den der Freiposition benachbarten Brennstäben innerhalb der vorgegebenen Leistungsgrenzen verbleibt.

Vorzugsweise ist das reparierte Brennelement in einer Randposition der Kernladung angeordnet, wobei die reparierten Stege der Kernumfassung zugewandt sind. Die Anordnung in einer Randposition ist deshalb anzustreben, weil dann der unbesetzten Stabposition kein Brennelement gegenüberliegt und somit eine Leistungserhöhung lediglich in den Nachbarstäben des die unbesetzte Stabposition aufweisenden Brennelementes auftritt.

Thermohydraulische und mechanische Rechnungen für ein 17 x 17-Brennelement habe gezeigt, daß der axiale Kühlmitteldurchsatz durch einen Wasserspalt um bis zu 30 % höher ist als der Durchsatz durch einen Unterkanal, der einen Brennstab enthält. Auch wird die Querströmung von den ungestörten Unterkanälen in den Wasserspalt hinein erhöht. Beides führt zur Zunahme der Schwingungsamplitude der Nachbarbrennstäbe. Jedoch liegt ein ausreichender Sicherheitsabstand zur spezifierten Schwingungsamplitude für relaxierte Abstandshalterfedern von max. 40 µm vor.

Anhand eines Ausführungsbeispieles wird das Reparaturverfahren und die Anordnung eines reparierten Brennelementes im Brennelementverband einer Kernladung beschrieben.

Dabei zeigt die
- Figur 1: eine Gesamtansicht eines Brennelementes,
- Figur 2: einen Schnitt entlang der Linie II-II der Figur 1,
- Figur 3: ein Brennelementquerschnitt mit unbesetzten Stabpositionen und
- Figur 4: einen Querschnitt durch einen Reaktordruckbehälter und die darin angeordnete Kernladung.

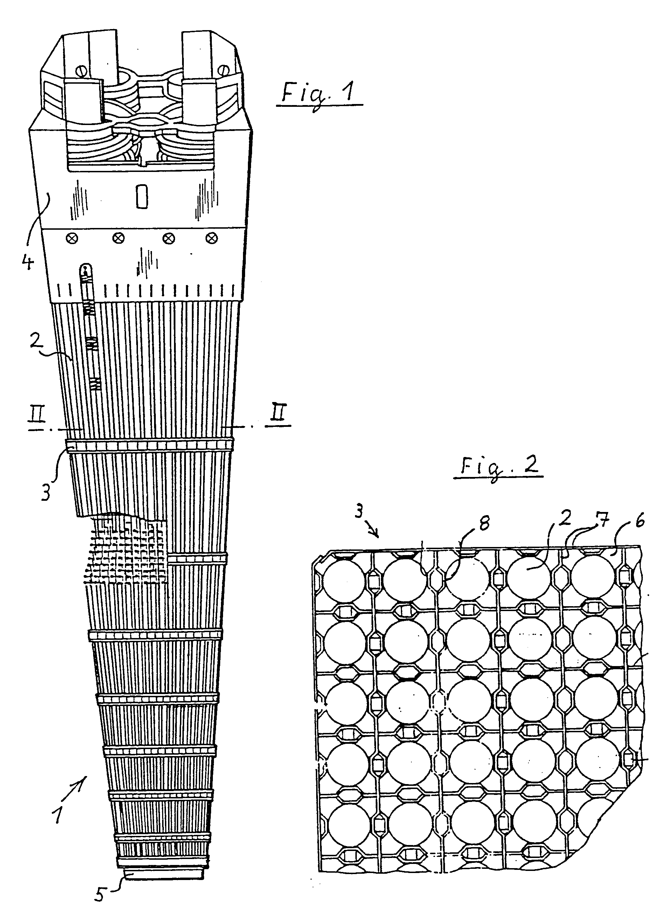

Die Figur 1 zeigt ein Kernreaktorbrennelement 1 in einer Gesamtansicht. Es besteht aus einer Vielzahl von Brennstäben 2, die von mehreren axial beabstandeten Abstandshaltern 3 in ihrer Position gehalten werden. Ein oberes und ein unteres Brennelementendstück 4, 5 wird von nicht dargestellten Führungsrohren zusammengehalten. Die Führungsrohre und ein ebenfalls nicht dargestelltes Instrumentierungsrohr tragen die Abstandshalter und fixieren sie in ihrem axialen Abstand.

Wie aus der Figur 2, die in einem größeren Maßstab den Teilbereich eines Abstandshalters zeigt, zu ersehen ist, durchsetzt jeder Brennstab 2 eine Zelle 6, so daß er von vier die Zelle bildenden Stegen 7 eingeschlossen ist, deren zum Teil federnd ausgebildete Noppen 8 den Brennstab 2 kontakten.

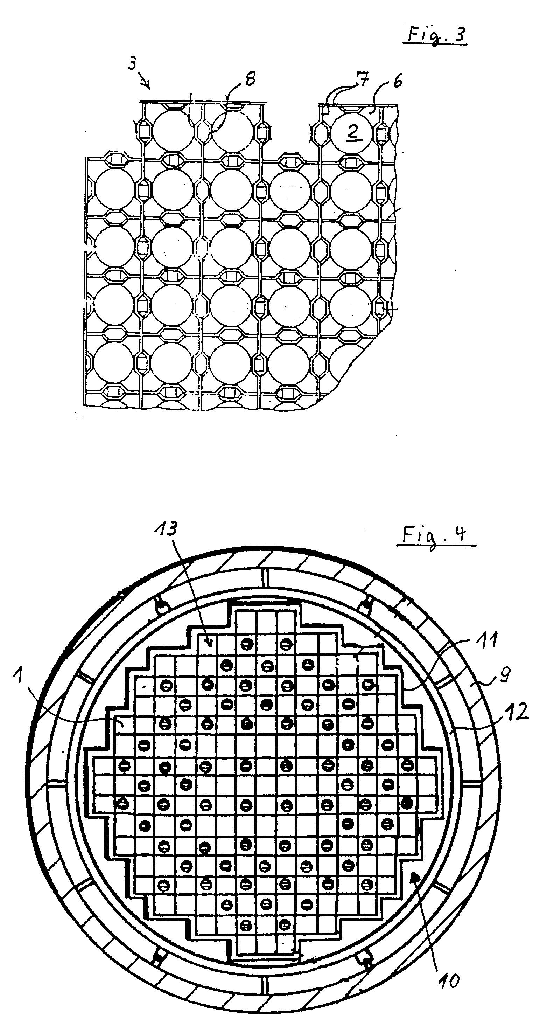

Wie aus der Figur 3 entnehmbar ist, sind die an der Peripherie des Abstandshalters liegenden Stege 7 einer Zelle 6 wegen einer Beschädigung abgetrennt und die Brennstäbe aus diesen Stabpositionen entnommen worden.

Die Figur 4 zeigt den Querschnitt durch einen Reaktordruckbehälter 9 und durch eine darin angeordnete Kernladung 10. Die aus einer Vielzahl von Brennelementen 1 zu einem Brennelementverband zusammengefaßte Kernladung ist von einer der Peripherie des Brennelementverbandes angepaßten Kernumfassung 11 umgeben. Zwischen der Kernumfassung und dem Reaktordruckbehälter ist ein thermischer Schild 12 angeordnet.

Erfindungsgemäß ist das in der aufgezeigten Weise reparierte Brennelement in einer Randposition 13 der Kernladung 9 angeordnet, so daß die aufgrund des Reparaturverfahrens nicht mit einem Stab besetzten Positionen der Kernumfassung 11 zugewandt sind.

## Patentansprüche

1. Verfahren zur Reparatur eines an der Peripherie eines Abstandshalters (3) beschädigten Kernreaktorbrennelementes (1) einer wassergekühlten Kernreaktoranlage, das aus einem Bündel längserstreckter Brennstäbe (2) besteht, die über mehrere gitterförmige, axial zueinander beabstandete Abstandshalter (3) in ihrer Position gehalten sind, wobei jeder Brennstab eine von hochkant angeordneten, sich kreuzenden Blechstegen (7) gebildete Zelle (6) des Abstandshalters durchsetzt und darin federnd abgestützt ist, dadurch gekennzeichnet, daß die beschädigten Stege (7) abgetrennt werden und der einer Zelle (6) mit beschädigten Stegen zugeordnete Brennstab (2) ersatzlos entfernt wird.

2. Brennelementverband einer Kernladung eines wassergekühlten Kernreaktors mit einem nach dem Verfahren nach Anspruch 1 reparierten Brennelementes dadurch gekennzeichnet, daß das Brennelement (1) in einer solchen Kernposition eingesetzt ist, bei der eine Leistungserhöhung in den der Freiposition benachbarten Brennstäben innerhalb der vorgegebenen Leistungsgrenzen verbleibt.

3. Brennelementverband nach Anspruch 2, dadurch gekennzeichnet, daß das Brennelement (2) in einer Randposition (12) der Kernladung (9) angeordnet ist und die reparierten Stege (7) der Kernumfassung zugewandt sind.

4. Verwendung des Verfahrens nach Anspruch 1 zur Reparatur eines an einer beliebigen Kernposition beschädigten Brennelementes.

## Claims

1. Method for repairing a nuclear-reactor fuel element (1) which is damaged on the periphery of a spacer (3) and belongs to a water-cooled nuclear-reactor installation and which consists of a bundle of longitudinally extended fuel rods (2) held in position via a plurality of grid-like spacers (3) axially spaced from one another, each fuel rod passing through and being resiliently supported in a spacer cell (6) formed by intersecting sheet-metal webs (7) arranged on edge, characterised in that the damaged webs (7) are severed, and the fuel rod (2) assigned to a cell (6) having damaged webs is removed without replacement.

2. Composite fuel-element structure of a core charge of a water-cooled nuclear reactor, having a fuel element repaired by the method according to Claim 1, characterised in that the fuel element (1) is inserted in a core position in which a power increase within the predetermined power limits remains in the fuel rods adjacent to the vacant position.

3. Composite fuel-element structure according to Claim 2, characterised in that the fuel element (2) is arranged in an edge position (12) of the core charge (9) and the repaired webs (7) confront the core surround.

4. Use of the method according to Claim 1 for repairing a fuel element damaged at any core position.

## Revendications

1. Procédé de réparation d'un assemblage combustible (1) endommagé au niveau de la périphérie d'un dispositif d'espacement (3), dans un réacteur nucléaire refroidi par eau, lequel assemblage combustible se compose d'un faisceau de crayons combustibles (2) allongés qui sont maintenus en position par plusieurs dispositifs d'espacement (3) en forme de grille disposés à distance les uns des autres dans la direction axiale, chaque crayon combustible traversant une cellule (6) du dispositif d'espacement formée par des lames de tôle (7) placées sur chant qui se croisent et étant supporté élastiquement dans celle-ci, caractérisé par le fait que l'on coupe les lames (7) endommagées et on retire, sans le remplacer, le crayon combustible (2) associé à une cellule (6) dont les lames sont endommagées.

2. Système d'assemblages combustibles d'une charge de coeur de réacteur nucléaire refroidi par eau comportant un assemblage combustible réparé conformément au procédé selon la revendication 1, caractérisé par le fait que l'assemblage combustible (1) est placé à un emplacement dans le coeur dans lequel une augmentation de puissance dans les crayons combustibles voisins de l'emplacement vide reste dans les limites prédéterminées.

3. Système d'assemblages combustibles selon la revendication 2, caractérisé par le fait que l'assemblage combustible (2) est placé dans un emplacement périphérique (12) de la charge de coeur (9) et les lames (7) réparées sont tournées vers l'enceinte du coeur.

4. Utilisation du procédé selon la revendication 1 pour la réparation d'un assemblage combustible endommagé se trouvant dans un emplacement quelconque du coeur.
